(19)

Europäisches
Patentamt
European
Patent Office
Office européen
des brevets

(11) **EP 2 369 736 A1**

(12) **EUROPEAN PATENT APPLICATION**

(43) Date of publication:
**28.09.2011 Bulletin 2011/39**

(21) Application number: **11159833.0**

(22) Date of filing: **25.03.2011**

(51) Int Cl.:
*H02P 27/08* (2006.01)     *H02P 29/02* (2006.01)
*H02M 1/32* (2007.01)     *B62D 5/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2010 JP 2010072548**

(71) Applicant: **OMRON Automotive Electronics Co., Ltd.**
**Komaki, Aichi 485-0802 (JP)**

(72) Inventors:
• **Kuratani, Shinichi**
  **Aichi Aichi 485-0802 (JP)**
• **Nakamura, Takenobu**
  **Aichi Aichi 485-0802 (JP)**

(74) Representative: **Giovannini, Francesca et al**
**Osha Liang**
**32, avenue de l'Opéra**
**75002 Paris (FR)**

(54) **Motor drive device**

(57)     The invention provides a motor drive device capable of detecting an ON failure of a switching element of an upper stage and a lower stage of all phases and capable of rapidly detecting the failure even if a single current detection unit is used. A control unit 102 for outputting a PWM signal to a drive unit 101 includes an upper stage regeneration abnormality determination unit 103, a lower stage regeneration abnormality determination unit 104, a normal time abnormality determination unit 105, and a duty limiting unit 106. The upper stage regeneration abnormality determination unit 103 and the lower stage regeneration abnormality determination unit 104 detect abnormal current at the time of regeneration, and the normal time abnormality determination unit 105 detects abnormal current at a normal time other than at the time of regeneration. If one of the abnormality determination units 103 to 105 detects an abnormal current, the duty limiting unit 106 limits the duty of the PWM signal of each phase within a predetermined range.

*FIG. 1*

**EP 2 369 736 A1**

**Description**

BACKGROUND OF THE INVENTION

1. TECHNICAL FIELD

The present invention relates to motor drive devices using a PWM (Pulse Width Modulation) control method, and particularly to a motor drive device for detecting a current value of each phase using a single current detection unit.

2. RELATED ART

An electrical power steering device of a vehicle includes an electric motor such as a three phase brushless motor for applying a steering assisting force corresponding to a steering torque of a handle on a steering mechanism. A motor drive device by a PWM control method (e.g., Japanese Unexamined Patent Publication No. 2007-244133) is known for the device for driving such a motor.

The motor drive device of the PWM control method includes three sets of a pair of upper and lower arms including a switch element for the upper arm and the lower arm. A target value of a current to be flowed to the motor is calculated according to the steering torque detected by a torque sensor, and a PWM signal having a predetermined duty is generated based on a deviation of the target value and the value of the current actually flowed to the motor. The motor is thus driven based on an ON/OFF operation of each switching element by the PWM signal.

In the motor drive device of Japanese Unexamined Patent Publication No. 2007-244133, a current detection resistor (shunt resistor) for detecting the current flowing to the motor is arranged on the lower arm of each phase. In other words, three current detection resistors are arranged, and the current actually flowing to the motor is detected by measuring the voltage at both ends of each resistor. Japanese Patent Publication No. 3484968 describes a motor drive device having an over current detection function, where the current detection resistor is also arranged on the lower arm in the present device. On the other hand, a motor drive device using a single current detection resistor is known (see e.g., Japanese Unexamined Patent Publication No. 2009-131098).

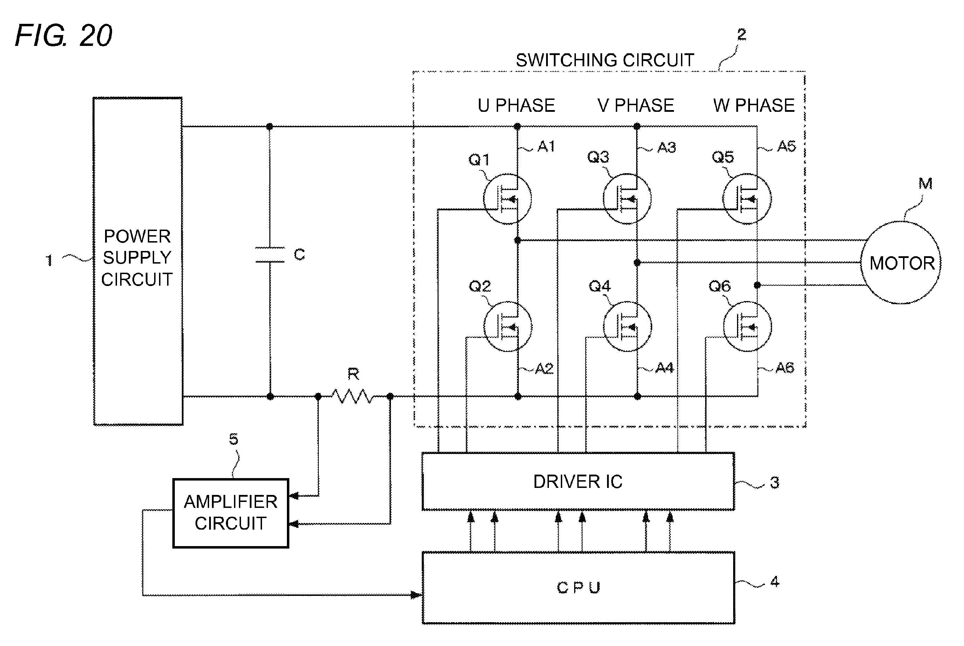

Fig. 20 shows one example of a motor drive device of the PWM control method using a single current detection resistor. A power supply circuit 1 is configured by a rectifier circuit, a smoothing circuit and the like, where a capacitor C is connected at an output end. A switching circuit 2 is configured by a three-phase bridge in which three sets of a pair of upper and lower arms are arranged in correspondence with a U phase, a V phase, and a W phase. An upper arm A1 of the U phase includes a switching element Q1, and a lower arm A2 of the U phase includes a switching element Q2. An upper arm A3 of the V phase includes a switching element Q3, and a lower arm A4 of the V phase includes a switching element Q4. An upper arm A5 of the W phase includes a switching element Q5, and a lower arm A6 of the W phase includes a switching element Q6. Such switching elements Q1 to Q6 are made of FETs (Field Effect Transistors).

A motor M is, for example, a three-phase brushless motor used in an electrical power steering device of a vehicle. A current detection resistor R for detecting the current flowing to the motor M is connected between the power supply circuit 1 and the switching circuit 2. An amplifier circuit 5 configured by a differential amplifier and the like amplifies the voltage of both ends of the current detection resistor R and outputs the amplified voltage to a CPU 4. The CPU 4 calculates a duty setting value corresponding to the duty of the PWM signal of each phase based on a detection current value calculated based on the voltage supplied from the amplifier circuit 5 and a target current value calculated based on the steering torque provided from the torque sensor (not illustrated). The PWM signal of each phase generated based on the duty setting value and a saw tooth shaped carrier signal is provided to a driver IC 3. The driver IC 3 outputs the PWM signal of each phase for turning ON/OFF the switching elements Q1 to Q6 individually to the gate of each switching element Q1 to Q6. By turning ON/OFF the switching elements Q1 to Q6 based on the PWM signal, the three phase voltage is supplied from the switching circuit 2 to the motor M thereby rotating the motor M.

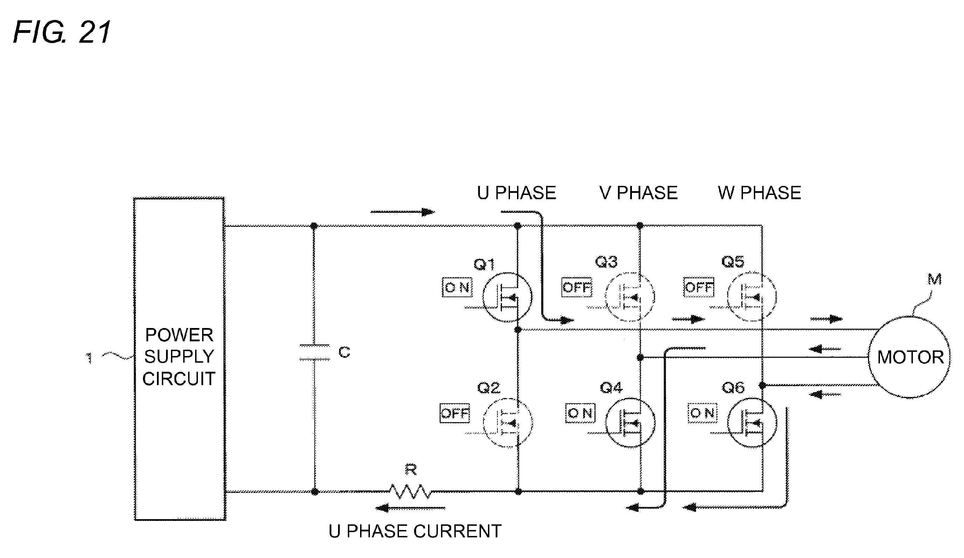

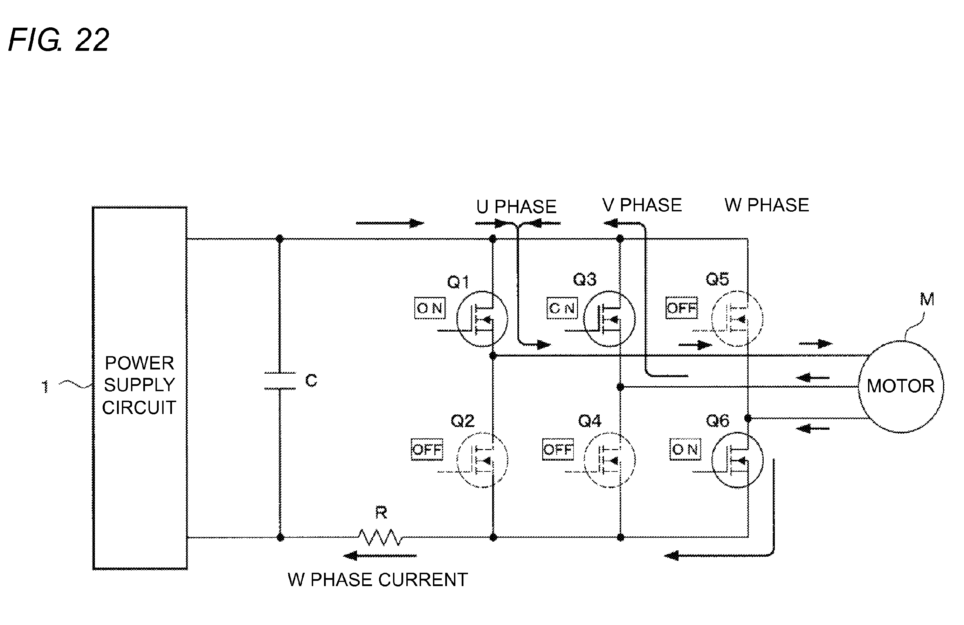

In the case of the motor drive device using the single current detection resistor R, the detection of the current flowing to the motor M in normal time is carried out by detecting the U phase current in the circuit state of Fig. 21 and detecting the W phase current in the circuit state of Fig. 22. Assume here that the U phase is the largest phase in which the duty is the largest, the V phase is the intermediate phase in which the duty is intermediate, and W phase is the smallest phase in which the duty is the smallest.

As shown in Fig. 21, the detection of the U phase current is carried out during the period in which the switching elements of the upper arm (hereinafter referred to as "upper stage switching element") Q1, Q3, Q5 are in the ON, OFF, OFF state, and the switching elements of the lower arm (hereinafter referred to as "lower stage switching element") Q2, Q4, Q6 are in the OFF, ON, ON state. In this case, the current flows in the path indicated with an arrow to the motor M, and the U phase current flows to the current detection resistor R. The voltage generated at both ends of the current detection resistor R by the U phase current is inputted to the CPU 4 through the amplifier circuit 5 (Fig. 20) and AD converted in the CPU 4, so that the U phase current value is detected.

As shown in Fig. 22, the detection of the W phase current is carried out during the period in which the upper stage switching elements Q1, Q3, Q5 are in the ON, ON, OFF state, and the lower stage switching elements Q2, Q4, Q6 are in the OFF, OFF, ON state. In this case, the current flows in the path indicated with an arrow to the motor M, and the W phase current flows to the current detection resistor R. The voltage generated at both ends of the current detection resistor R by the W phase current is inputted to the CPU 4 through the amplifier circuit 5 (Fig. 20) and AD converted in the CPU 4, so that the W phase current value is detected.

The V phase current value is obtained through calculation from the U phase current value and the W phase current value. In other words, the following relationship is satisfied where Iu is the U phase current value, Iv is the V phase current value and Iw is the W phase current value.

$$Iu + Iv + Iw = 0$$

Therefore, the V phase current value Iv can be calculated as Iv = -(Iu + Iv).

In the motor drive device described above, the switching elements Q1 to Q6 may remain in the ON state and not return to the OFF state due to abnormality in the element itself. Furthermore, even if the element itself is normal, the switching elements Q1 to Q6 may remain in the ON state and not return to the OFF state if the driver IC 3 and the CPU 4 that provide the PWM signal to the element is abnormal and continues to output the ON signal. Thus, the failure in which the switching elements Q1 to Q6 remain in the ON state is hereinafter referred to as "ON failure".

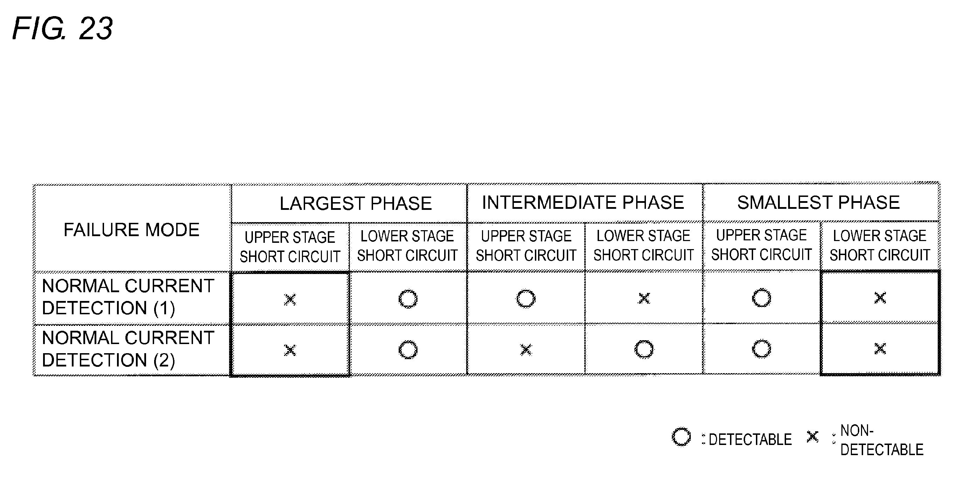

Fig. 23 is a table showing the ON failure detectability of the upper stage switching element and the lower stage switching element for every phase. The "upper stage short circuit" refers to the ON failure of the upper stage switching elements Q1, Q3, Q5, and the "lower stage short circuit" refers to the ON failure of the lower stage switching elements Q2, Q4, Q6. Moreover, "normal current detection (1)" refers to the current detection at the timing of Fig. 21, and "normal current detection (2)" refers to the current detection at the timing of Fig. 22.

In Fig. 23, the details on the ON failure detectability in the case of the normal current detection (1) are as follows.

With respect to the largest phase (U phase), the upper stage switching element Q1 is in the ON state as shown in Fig. 21 and the normal operation and the upper stage short circuit cannot be distinguished, and hence the upper stage short circuit cannot be detected. On the other hand, the lower stage switching element Q2 is in the OFF state at the time of the normal operation, and hence the over current flows to the current detection resistor R through the elements Q1, Q2 when ON failure occurs in the element Q2, and the lower stage short circuit can be detected.

With respect to the intermediate phase (V phase), the over current flows to the current detection resistor R through the elements Q3, Q4 when ON failure occurs in the element Q3 since the upper stage switching element Q3 is in the OFF state at the time of normal operation as shown in Fig. 21, and the upper stage short circuit can be detected. On the other hand, the lower stage switching element Q4 is in the ON state, and hence the normal operation and the lower stage short circuit cannot be distinguished, and the lower stage short circuit cannot be detected.

With respect to the smallest phase (W phase), the over current flows to the current detection resistor R through the elements Q5, Q6 when ON failure occurs in the element Q5 since the upper stage switching element Q5 is in the OFF state at the time of normal operation as shown in Fig. 21, and the upper stage short circuit can be detected. On the other hand, the lower stage switching element Q6 is in the ON state, and hence the normal operation and the lower stage short circuit cannot be distinguished, and the lower stage short circuit cannot be detected.

The details on the ON failure detectability in the case of the normal current detection (2) are as follows.

With respect to the largest phase (U phase), the upper stage switching element Q1 is in the ON state as shown in Fig. 22 and the normal operation and the upper stage short circuit cannot be distinguished, and hence the upper stage short circuit cannot be detected. On the other hand, the lower stage switching element Q2 is in the OFF state at the time of the normal operation, and hence the over current flows to the current detection resistor R through the elements Q1, Q2 when ON failure occurs in the element Q2, and the lower stage short circuit can be detected.

With respect to the intermediate phase (V phase), the upper stage switching element Q3 is in the ON state at the time of normal operation as shown in Fig. 22 and the normal operation and the upper stage short circuit cannot be distinguished, and hence the upper stage short circuit cannot be detected. On the other hand, the lower stage switching element Q4 is in the OFF state, and hence the over current flows to the current detection resistor R through the elements Q3, Q4 when ON failure occurs in the element Q4, and the lower stage short circuit can be detected.

With respect to the smallest phase (W phase), the over current flows to the current detection resistor R through the elements Q5, Q6 when ON failure occurs in the element Q5 since the upper stage switching element Q5 is in the OFF state at the time of normal operation as shown in Fig. 22, and the upper stage short circuit can be detected. On the other hand, the lower stage switching element Q6 is in the ON state, and hence the normal operation and the lower stage short circuit cannot be distinguished, and the lower stage short circuit cannot be detected.

Therefore, when detecting the motor current at two timings of the normal current detections (1), (2) using a single current detection resistor R, the ON failure (upper stage short circuit) of the upper stage switching element Q1 of the largest phase (U phase) and the ON failure (lower stage short circuit) of the lower stage switching element Q6 of the smallest phase (W phase) cannot be detected as shown with a thick frame in Fig. 23.

SUMMARY

The present invention has been devised to solve the problems described above, and an object thereof is to provide a motor drive device capable of detecting an ON failure of an upper stage switching element and a lower stage switching element for all phases even if a single current detection unit is used.

Another object of the present invention is to provide a motor drive device capable of avoiding current detection from becoming disabled at the time of regeneration when a duty of a PWM signal becomes 100% or 0% (or vicinity thereto), and rapidly detecting the failure.

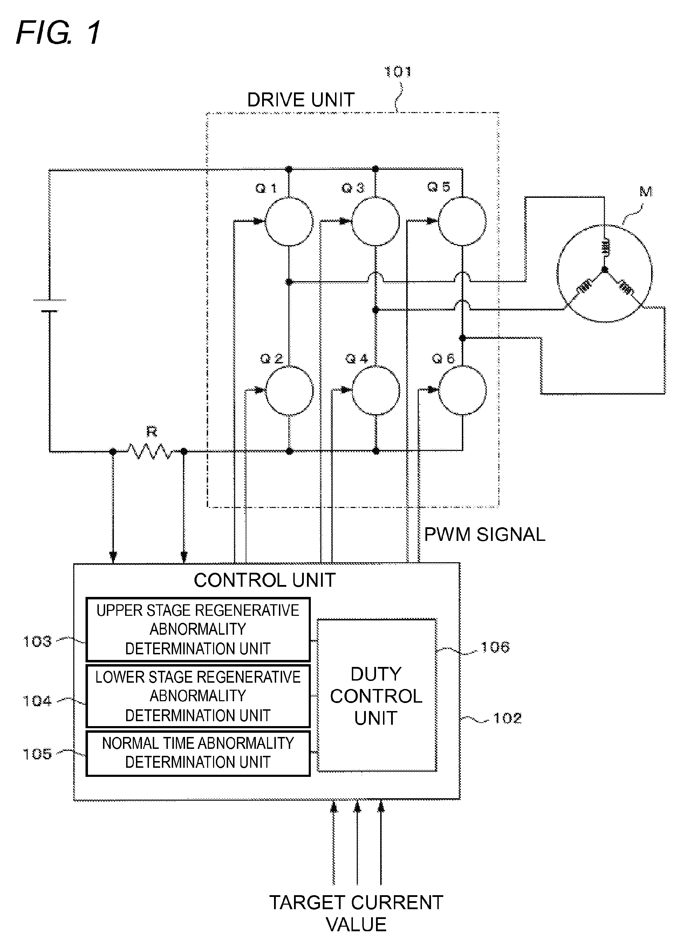

As shown in Fig. 1, a motor drive device according to the present invention includes a drive unit 101, in which at least three sets of a pair of upper and lower arms including switching elements Q1 to Q6 at the upper arm and the lower arm are arranged, for driving a motor M based on an ON/OFF operation of each of the switching elements by a PWM signal; a single current detection resistor R for detecting a current flowing to the drive unit 101; and a control unit 102 for detecting a current value of a current flowing to each phase of the motor M based on the current flowing to the current detection resistor R, and outputting the PWM signal to each of the switching elements Q1 to Q6 based on a target current value of each phase and the detected current value of each phase. The control unit 102 further includes an upper stage regeneration abnormality determination unit 103, a lower stage regeneration abnormality determination unit 104, a normal time abnormality determination unit 105, and a duty limiting unit 106.

The upper stage regeneration abnormality determination unit 103 detects a current flowing to the current detection resistor R in an upper stage regeneration state in which the switching elements Q1, Q3, Q5 of the upper arms of all phases are in an ON state and the switching elements Q2, Q4, Q6 of the lower arms of all phases are in an OFF state, and determines abnormality based on the detection result. For example, if the current value of the current flowing to the current detection resistor R is greater than or equal to a predetermined value, determination is made that at least one of the switching elements Q2, Q4, Q6 of the lower arms is ON failure.

The lower stage regeneration abnormality determination unit 104 detects a current flowing to the current detection resistor R in a lower stage regeneration state in which the switching elements Q1, Q3, Q5 of the upper arms of all phases are in the OFF state and the switching elements Q2, Q4, Q6 of the lower arms of all phases are in the ON state, and determines abnormality based on the detection result. For example, if the current value of the current flowing to the current detection resistor R is greater than or equal to a predetermined value, determination is made that at least one of the switching elements Q1, Q3, Q5 of the upper arms is ON failure.

The normal time abnormality determination unit 105 detects a current flowing to the current detection resistor R in a normal state excluding the upper stage regeneration state and the lower stage regeneration state, and determines abnormality based on the detection result.

If at least one of the upper stage regeneration abnormality determination unit 103, the lower stage regeneration abnormality determination unit 104, and the normal time abnormality determination unit 105 detects an abnormal current, the duty limiting unit 106 limits a duty so that a maximum value of a duty of the PWM signal of each phase is smaller than or equal to a constant value $\alpha$ ($\alpha$ < 100%) and a minimum value is greater than or equal to a constant value $\beta$ ($\beta$ > 0%).

In the present invention, if ON failure occurs in at least one of the lower stage switching elements Q2, Q4, Q6 in the upper stage regeneration state in which all upper stage switching elements Q1, Q3, Q5 of each phase are turned ON, the current that is not supposed to flow originally flows to the current detection resistor R. If ON failure occurs in at least one of the upper stage switching elements Q1, Q3, Q5 in the lower stage regeneration state in which all lower stage switching elements Q2, Q4, Q6 of each phase are turned ON as well, the current that is not supposed to flow originally flows to the current detection resistor R. Therefore, the ON failure can be detected for all phases by adding the current detection at the time of upper stage regeneration and the lower stage regeneration to the usual current detection of the related art (Fig. 21 and Fig. 22).

In the present invention, if at least one of the abnormality determination units 103 to 105 determines abnormality, the duty limiting unit 106 limits the duty of the PWM signal of each phase to within a predetermined range, and hence the duty of each phase does not become 100% or 0% (or vicinity thereof). Therefore, the time necessary for current detection can be ensured and the abnormal current at the time of regeneration can be detected, whereby the failure can be rapidly detected.

In the present invention, the control unit 102 may determine that the failure has occurred if the upper stage regeneration abnormality determination unit 103, the lower stage regeneration abnormality determination unit 104, or the normal time abnormality determination unit 105 detects abnormal current while limiting the duty by the duty limiting unit 106.

The control unit 102 preferably determines that the failure has occurred if abnormality is determined continuously for a predetermined number of times over a plurality of cycles by the upper stage regeneration abnormality determination unit 103, the lower stage regeneration abnormality determination unit 104, or the normal time abnormality determination unit 105 after limiting the duty by the duty limiting unit 106. This is effective in enhancing the accuracy of failure determination.

In a preferred embodiment of the present invention, the duty limiting unit 106 releases the limitation of the duty and returns the duty of the PWM signal of each phase to the original state if a state in which the abnormal current is not detected by each of the abnormality determination units 103 to 105 continues for a constant time after limiting the duty.

Accordingly, the motor M is not continuously driven at low power indefinitely and a motor drive force can be rapidly recovered.

In the present invention, the lower stage regeneration abnormality determination unit 104 may determine as a grounding failure of the motor M when detected that a current of greater than or equal to a predetermined value in a direction from the resistor to the motor M flowed to the current detection resistor R in the lower stage regeneration state.

The grounding failure of the motor M thus can be detected using the current detection at the time of lower stage regeneration.

In the present invention, the lower stage regeneration abnormality determination unit 104 may determine as a power supply short circuit failure of the motor M when detected that a current of greater than or equal to a predetermined value in a direction from the motor M to the resistor flowed to the current detection resistor R in the lower stage regeneration state.

The power supply short circuit failure of the motor M thus can be detected using the current detection at the time of lower stage regeneration.

According to the present invention, there can be provided a motor drive device capable of detecting the ON failure of the upper stage switching element and the lower stage switching element for all phases even if a single current detection unit is used. Furthermore, the failure can be rapidly detected since the abnormal current can be reliably detected even at the time of regeneration by the limitation of the duty.

BRIEF DESCRIPTION OF THE DRAWINGS

Fig. 1 is a view showing a basic configuration of a motor drive device according to the present invention;
Fig. 2 is a view describing a timing of current detection in the present invention;
Fig. 3 is a table showing ON failure detectability for every phase in the present invention;
Fig. 4 is a view showing a current path in normal current detection (1);
Fig. 5 is a view showing a current path in normal current detection (2);
Fig. 6 is a view showing a current path in an upper stage regeneration stage (normal time);
Fig. 7 is a view showing a current path in an upper stage regeneration stage (failure time);
Fig. 8 is a view showing a current path in a lower stage regeneration stage (normal time);
Fig. 9 is a view showing a current path in a lower stage regeneration stage (failure time);
Fig. 10 is a view describing current detection when a duty of a PWM signal is around 100%;
Fig. 11 is a view describing current detection when the duty of the PWM signal is around 0%;
Fig. 12 is a view showing a duty of each phase when the duty is not limited;
Fig. 13 is a view showing the duty of each phase when the duty is limited;
Fig. 14 is a timing chart showing the PWM signal at a normal time;
Fig. 15 is a timing chart showing the PWM signal at an abnormal time;
Fig. 16 is a timing chart showing another PWM signal at a normal time;
Fig. 17 is a timing chart showing another PWM signal at an abnormal time;
Fig. 18 is a view describing the detection of a grounding failure at the time of lower stage regeneration;
Fig. 19 is a view describing the detection of a power supply short circuit failure (powering failure) at the time of lower stage regeneration;
Fig. 20 shows one example of a motor drive device of a PWM control method using a single current detection resistor;
Fig. 21 is a view describing detection of a U phase current;
Fig. 22 is a view describing detection of a W phase current;
Fig. 23 is a table showing ON failure detectability for every phase in a related art.

DETAILED DESCRIPTION

Hereinafter, embodiments of the present invention will be described with reference to the drawings. A circuit configuration of a motor drive device is the same as that shown in Fig. 20. Therefore, Fig. 20 will be hereinafter cited as the embodiment of the present invention. Each unit of Fig. 20 has already been described, and thus the detailed descriptions thereof will not be given here.

The correspondence relationship of Fig. 1 and Fig. 20 is as follows. A drive unit 101 of Fig. 1 corresponds to the switching circuit 2 of Fig. 20. A control unit 102 of Fig. 1 corresponds to one part of the circuit including the driver IC 3, the CPU 4, and the amplifier circuit 5 of Fig. 20. The CPU 4 of Fig. 20 has each function of an upper stage regeneration abnormality determination unit 103, a lower stage regeneration abnormality determination unit 104, a normal time abnormality determination unit 105, a duty limiting unit 106 of Fig. 1.

The detection of a motor current in the present invention and the detection of an ON failure of a switching element will be described below.

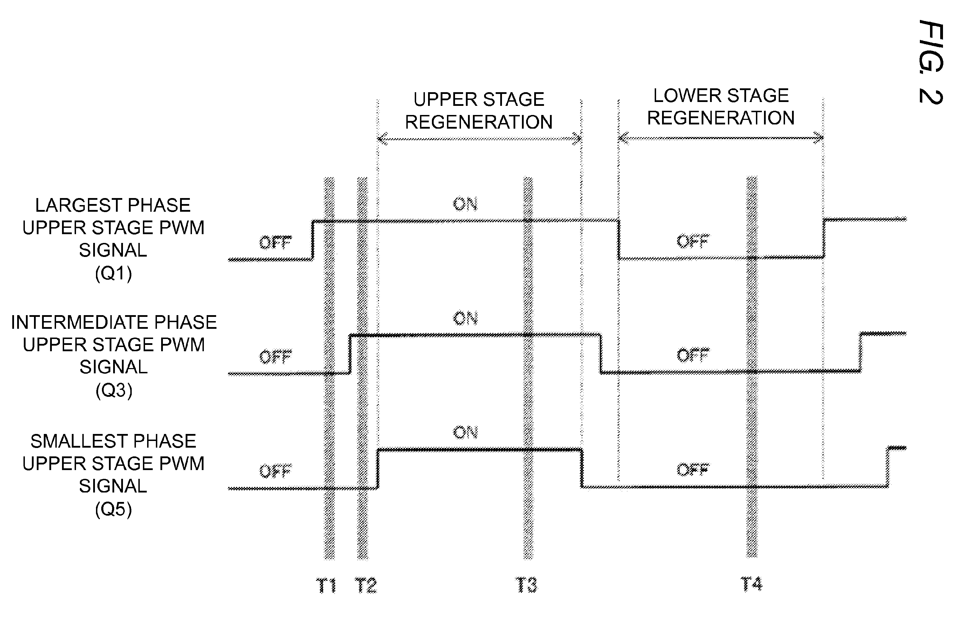

Fig. 2 is a view describing a timing for detecting a current flowing to a current detection resistor R. The current detection is carried out in four timing T1 to T4. The "timing" referred to herein means the "period" having a time width (e.g., 2 μsec) in which the current can be detected.

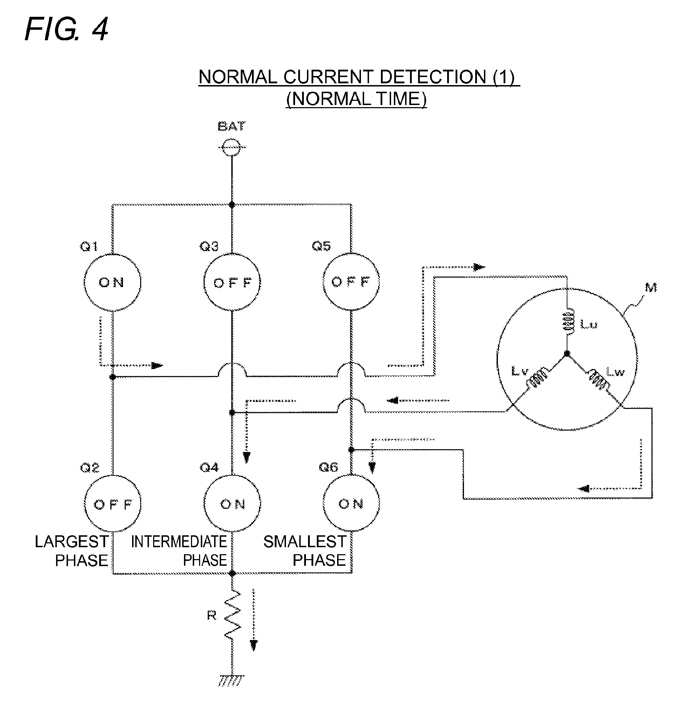

T1 is the timing of the normal current detection (1) in normal time described in Fig. 21. At such timing T1, the current of largest phase (U phase herein) is flowed to the current detection resistor R with an upper stage switching element Q1 in the ON state, Q3 in the OFF state and Q5 in the OFF state. A current path of each phase in this case is as shown with a broken line Fig. 4. In Fig. 4, Lu, Lv, Lw are windings of a U phase, a V phase and a W phase in a motor M, and BAT is a power supply (same in the following drawings). The voltage generated at both ends of the resistor R by the current flowed to the current detection resistor R is inputted to the CPU 4 through the amplifier circuit 5 (Fig. 20) and AD converted in the CPU 4, so that the U phase current value is detected. The normal abnormality determination unit 105 determines as abnormal if the value of the current flowing to the current detection resistor R at the timing T1 is greater than or equal to a predetermined value. The abnormality in this case is the ON failure of the lower stage switching element Q2 of the largest phase, the ON failure of the upper stage switching element Q3 of the intermediate phase, or the ON failure of the upper stage switching element Q5 of the smallest phase as described in Fig. 23.

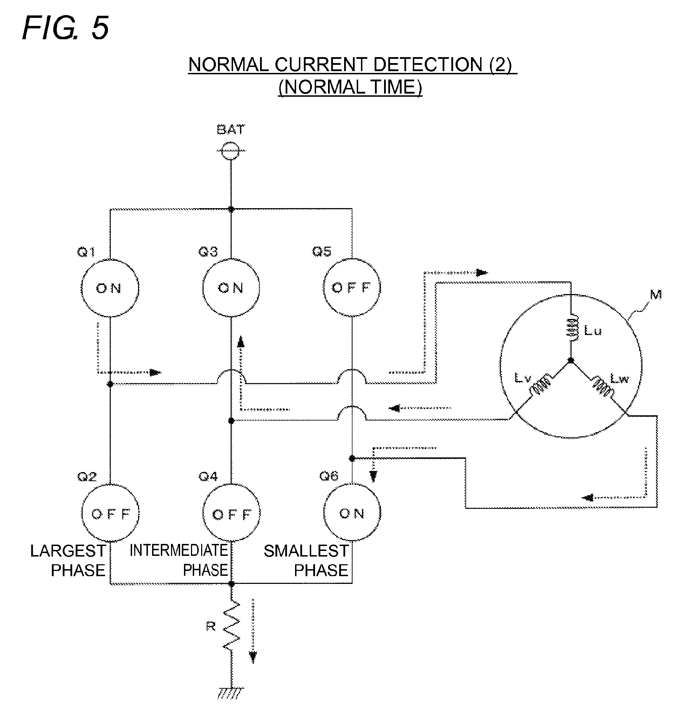

T2 is the timing of the normal current detection (2) in normal time described in Fig. 22. At such timing T2, the current of smallest phase (W phase herein) is flowed to the current detection resistor R with the upper stage switching element Q1 in the ON state, Q3 in the ON state and Q5 in the OFF state. The current path of each phase in this case is as shown with a broken line Fig. 5. The voltage generated at both ends of the resistor R by the current flowed to the current detection resistor R is inputted to the CPU 4 through the amplifier circuit 5 (Fig. 20) and AD converted in the CPU 4, so that the W phase current value is detected. The normal abnormality determination unit 105 determines as abnormal if the value of the current flowing to the current detection resistor R at the timing T2 is greater than or equal to a predetermined value. The abnormality in this case is the ON failure of the lower stage switching element Q2 of the largest phase, the ON failure of the lower stage switching element Q4 of the intermediate phase, or the ON failure of the upper stage switching element Q5 of the smallest phase as described in Fig. 23.

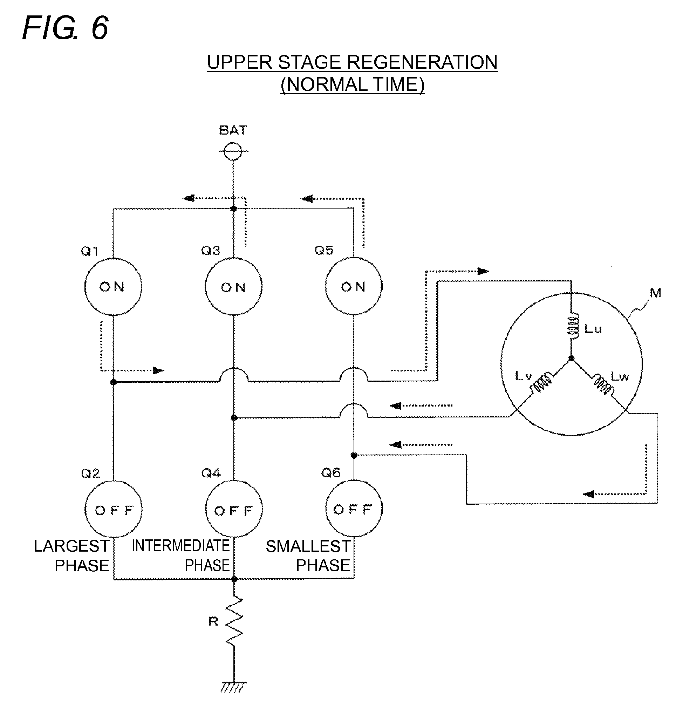

T3 is the timing of the upper stage regeneration current detection newly added in the present invention. At such timing T3, the current flowing to the current detection resistor R in the upper stage regeneration state in which all the upper stage switching elements Q1, Q3, Q5 are in the ON state (in this case, all lower stage switching elements Q2, Q4, Q6 are in the OFF state). The current path in the upper stage regeneration state at the normal time is as shown in Fig. 6. In other words, the regenerative current based on the electric energy accumulated in the wiring Lu, Lv, Lw of the motor M circulate the path shown with a broken line through the upper stage switching elements Q1, Q3, Q5, and the current does not flow to the current detection resistor R.

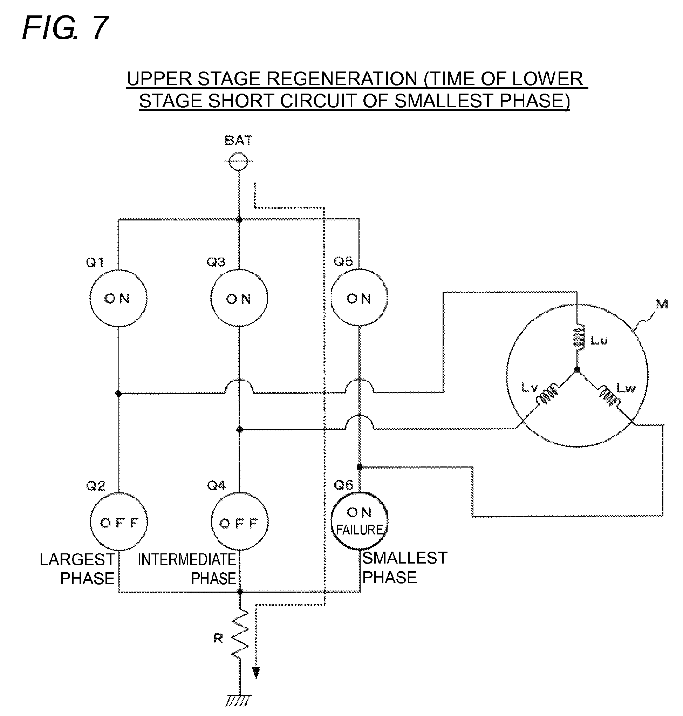

If the ON failure occurs in the lower stage switching element such as the lower stage switching element Q6 of the smallest phase (W phase), the switching elements Q5, Q6 are both turned ON as shown in Fig. 7. The current that is not supposed to flow originally flows to the current detection resistor R in the path shown with a broken line from the power supply BAT through the switching elements Q5, Q6. This is the same when the ON failure occurs in the switching element Q2, Q4. Therefore, the ON failure of the lower stage switching elements Q2, Q4, Q6 can be detected by detecting such a current. In this case, the upper stage regeneration abnormality determination unit 103 (Fig. 1) determines as abnormal (ON failure of lower stage switching element) when the current value of the current flowing to the current detection resistor R at the time of upper stage regeneration is greater than or equal to a predetermined value.

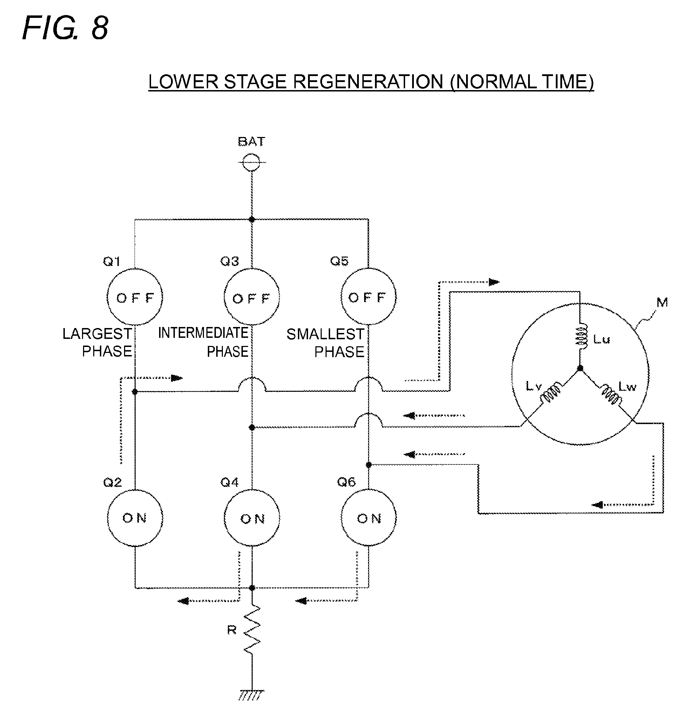

T4 is the timing of the lower stage regeneration current detection newly added in the present invention. At such timing T4, the current flowing to the current detection resistor R in the lower stage regeneration state in which all the upper stage switching elements Q1, Q3, Q5 are in the OFF state (in this case, all lower stage switching elements Q2, Q4, Q6 are in the ON state) is detected. The current path in the lower stage regeneration state at the normal time is as shown in Fig. 8. In other words, the regenerative current based on the electric energy accumulated in the wiring Lu, Lv, Lw of the motor M circulate the path shown with a broken line through the lower stage switching elements Q2, Q4, Q6, and the current does not flow to the current detection resistor R.

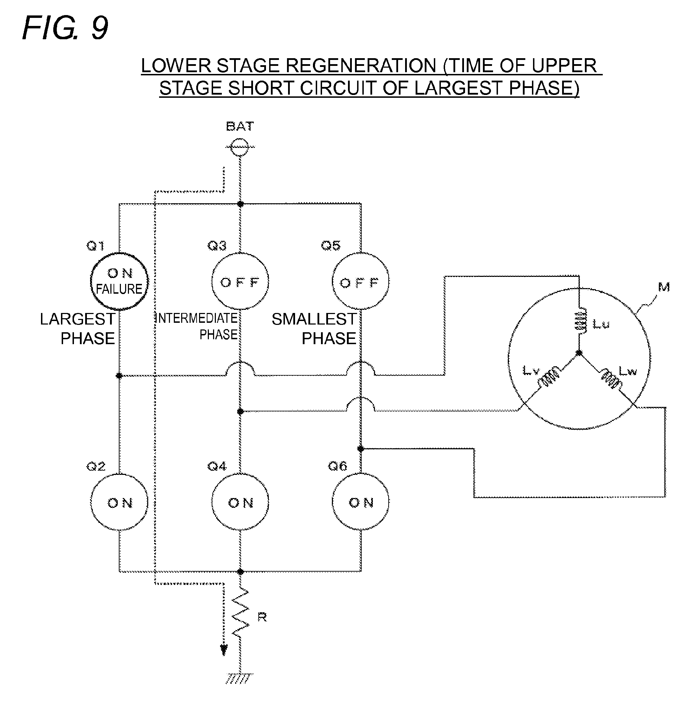

On the other hand, if the ON failure occurs in the upper stage switching element such as the upper stage switching element Q1 of the largest phase (U phase), the switching elements Q1, Q2 are both turned ON as shown in Fig. 9. The current that is not supposed to flow originally flows to the current detection resistor R in the path shown with a broken line from the power supply BAT through the switching elements Q1, Q2. This is the same when the ON failure occurs in the switching element Q3, Q5. Therefore, the ON failure of the upper stage switching elements Q1, Q3, Q5 can be detected by detecting such a current. In this case, the lower stage regeneration abnormality determination unit 104 (Fig. 1) determines as abnormal (ON failure of upper stage switching element) when the current value of the current flowing to the current detection resistor R at the time of lower stage regeneration is greater than or equal to a predetermined value.

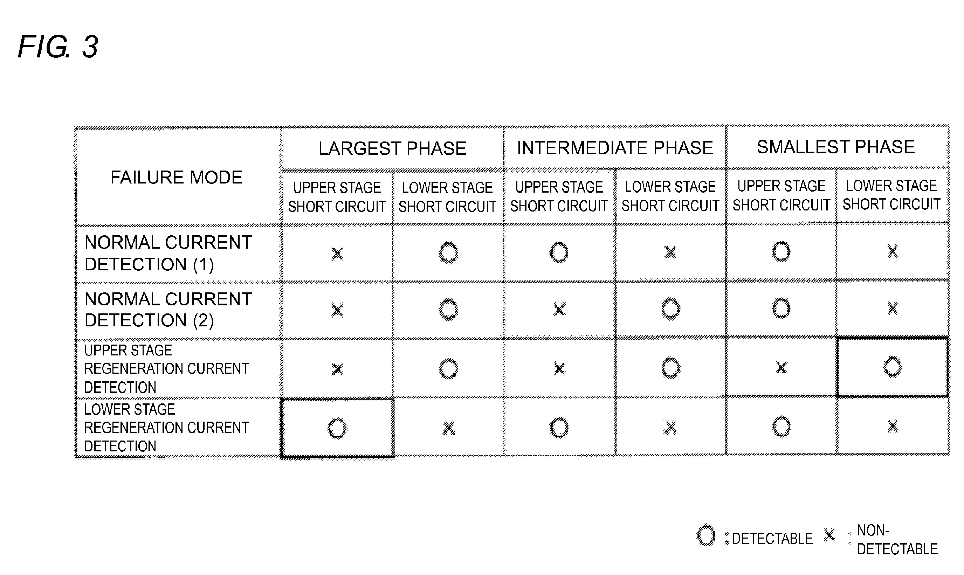

Fig. 3 is a table showing the ON failure detectability of the upper stage switching element and the lower stage switching element for every phase. Similarly to Fig. 23, the "upper stage short circuit" refers to the ON failure of the upper stage switching elements Q1, Q3, Q5, and the "lower stage short circuit" refers to the ON failure of the lower stage switching elements Q2, Q4, Q6.

The ON failure detectability in the case of the normal current detection (1) and the ON failure detectability in the case of the normal current detection (2) are the same as Fig. 23 and thus the description thereof will not be given.

The ON failure detectability in the case of the upper stage regeneration current detection will be described below. At the time of the upper stage regeneration, all the upper stage switching elements Q1, Q3, Q5 are in the ON state as shown in Fig. 6 and the normal operation and the upper stage short circuit cannot be distinguished, and hence the upper stage short circuit cannot be detected for all the phases. On the other hand, the lower stage switching elements Q2, Q4, Q6 are all in the OFF state, and hence the over current flows to the current detection resistor R if ON failure occurs in one of the lower stage switching elements (Fig. 7), so that the lower stage short circuit can be detected.

The ON failure detectability in the case of the lower stage regeneration current detection will be described below. At the time of the lower stage regeneration, all the lower stage switching elements Q2, Q4, Q6 are in the ON state as shown in Fig. 8 and the normal operation and the lower stage short circuit cannot be distinguished, and hence the lower stage short circuit cannot be detected for all the phases. On the other hand, the upper stage switching elements Q1, Q3, Q5 are all in the OFF state, and hence the over current flows to the current detection resistor R if ON failure occurs in one of the upper stage switching elements (Fig. 9), so that the upper stage short circuit can be detected.

Therefore, according to the present embodiment, the current detection is carried out at the time of upper stage regeneration and lower stage regeneration in addition to the normal current detection (1) and the normal current detection (2) at normal times. Thus, as shown with a thick frame in Fig. 3, the ON failure (Fig, 9) of the upper stage switching element Q1 of the largest phase and the ON failure (Fig. 7) of the lower stage switching element Q6 of the smallest phase can also be detected. As a result, the ON failure of the upper stage switching elements Q1, Q3, Q5 and the ON failure of the lower stage switching elements Q2, Q4, Q6 can be detected for all phases.

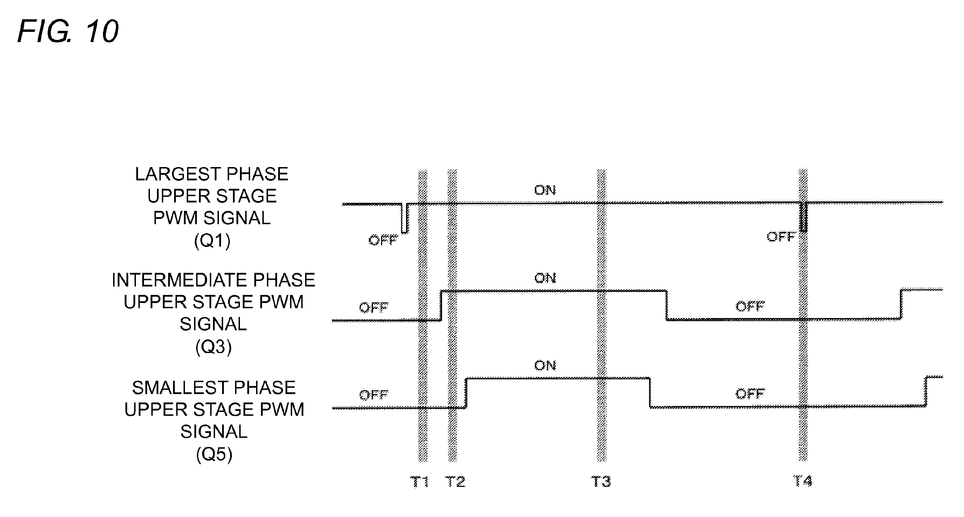

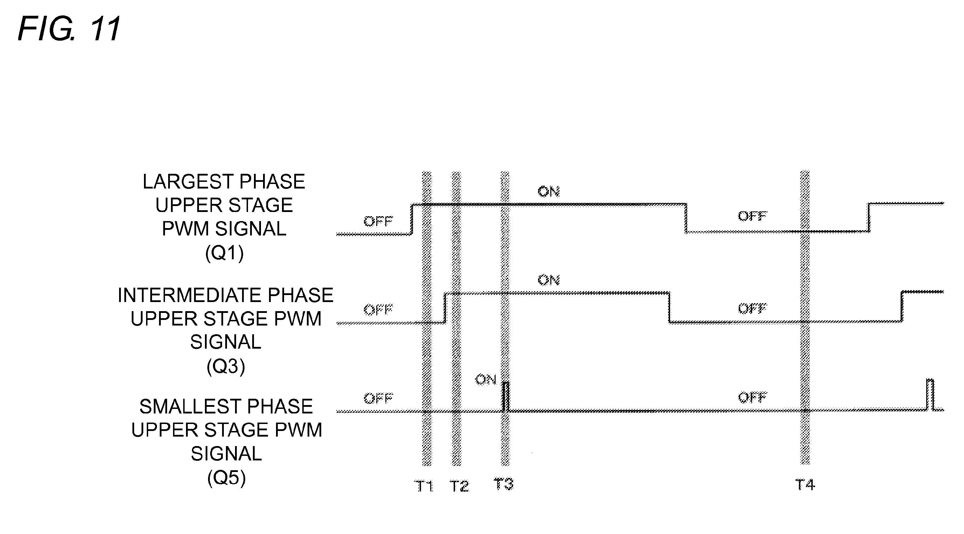

A detection time of a certain extent is necessary to detect the current flowing to the current detection resistor R. However, if the motor M is rotating at high speed (at high speed steering), the duty of the PWM signal becomes around 100% or around 0%, and the current detection at the time of regeneration may not be carried out. For example, as shown in Fig. 10, when the duty of the upper stage PWM signal of the largest phase is around 100%, the OFF time of the PWM signal becomes shorter than the time width of the timing T4, and the current detection at the time of lower stage regeneration becomes impossible. As a result, the ON failure of the upper stage switching element Q1 of the largest phase cannot be detected. As shown in Fig. 11, when the duty of the upper stage PWM signal of the smallest phase is around 0%, the ON time of the PWM signal becomes shorter than the time width of the timing T3, and the current detection at the time of upper stage regeneration becomes impossible. As a result, the ON failure of the lower stage switching element Q6 of the smallest phase cannot be detected.

In the present embodiment, the above drawbacks are prevented from occurring by limiting the duty of the PWM signal of each phase to within a constant range when the abnormal current is detected.

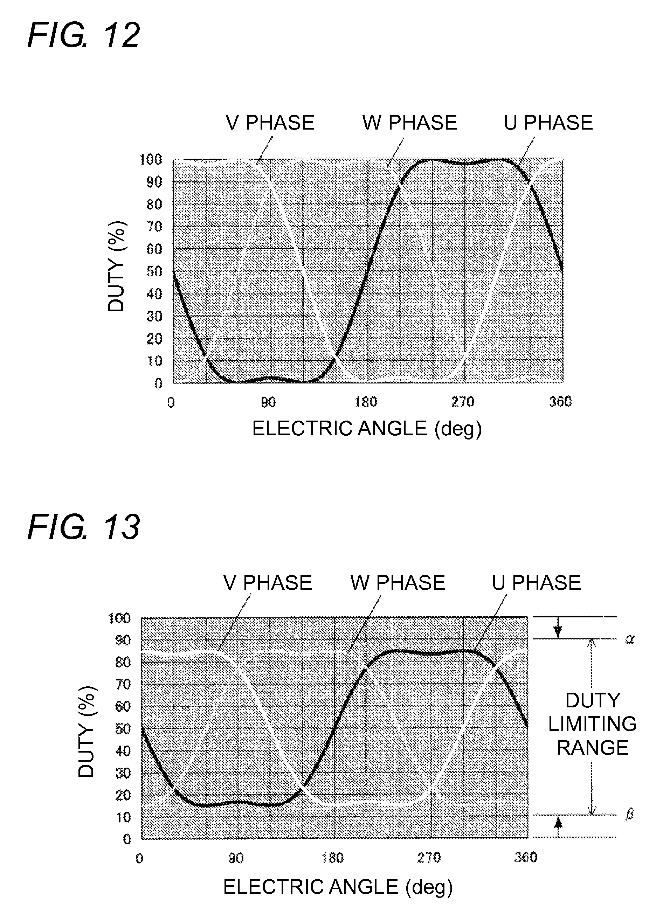

In the present embodiment, the detection of the abnormal current is carried out at four timings, the normal time (T1, T2), the upper stage regeneration (T3), and the lower stage regeneration (T4) as shown in Fig. 2 in one cycle of the PWM signal. The duty is not limited if the abnormal current is not detected in any of the timings. Fig. 12 is a view showing the duty of each phase when the duty is not limited, where the maximum value of the duty of each phase is 100% (include vicinity) and the minimum value is 0% (include vicinity).

If the abnormal current is detected at one of the timings T1 to T4, the duty limitation is carried out. Fig. 13 is a view showing the duty of each phase when the duty is limited. The duty of each phase is limited so that the maximum value is smaller than or equal to a constant value $\alpha$ ($\alpha < 100\%$) and the minimum value is greater than or equal to a constant value $\beta$ ($\beta > 0\%$). In this case, assume $\alpha = 90\%$, $\beta = 10\%$ by way of example.

The duty is limited for the following reasons. If the abnormal current is detected at one of the timings T1 to T4, the possibility failure such as short circuit occurred is high but the abnormal current may be incidentally detected due to noise or false operation. Therefore, determination is made as failure if the abnormal current is detected continuously for a predetermined number of times over a plurality of cycles to enhance the accuracy of failure determination. However, at which timing T1 to T4 the abnormal current is detected when failure occurs changes depending on the state of the failure or the rotation state of the motor. Thus, even if the abnormal current is detected at a certain cycle, if the timing at which the abnormal current is detected in the next cycle is T4 of Fig. 10 or T3 of Fig. 11, the abnormal current cannot be detected since the OFF period of the largest phase and the ON period of the smallest phase are short, as described above. As a result, a temporal delay occurs until determined as failure, where if a state in which the abnormal current cannot be detected continues for a long time, this may lead to breakage of the element. Thus, when the abnormal current is detected at one of T1 to T4, the duty of each phase is limited to reduce the duty of the largest phase and increase the duty of the smallest phase. The OFF period of the largest phase and the ON period of the smallest phase thus become longer, and hence the abnormal current can be continuously detected thereafter and the failure can be rapidly detected.

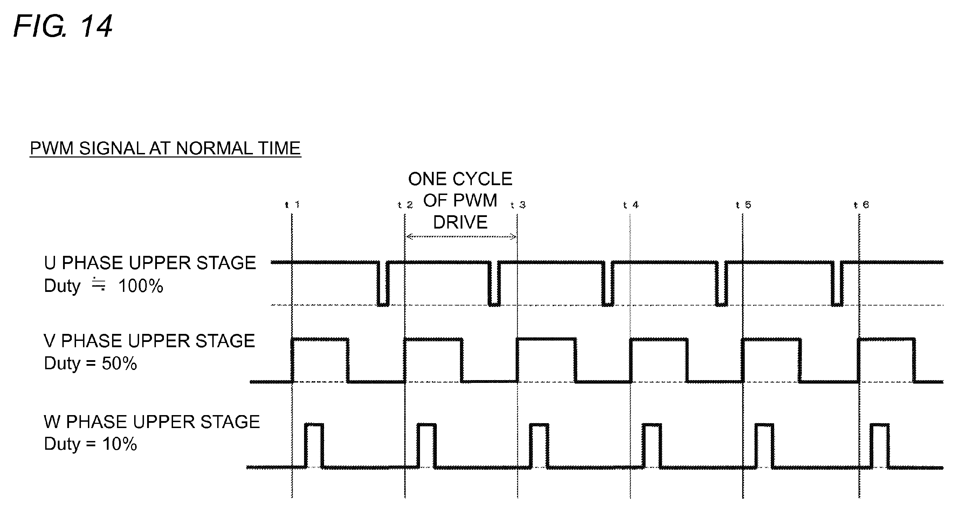

The duty limitation in the present invention will be more specifically described below with reference to Fig. 14 to Fig. 17.

First, a first example will be described. Fig. 14 shows the PWM signal of normal time when the duty of the upper stage switching element Q1 of the U phase (largest phase) is around 100%, the duty of the upper stage switching element Q3 of the V phase (intermediate phase) is 50%, and the duty of the upper stage switching element Q5 of the W phase (smallest phase) is 10%. In this state, the abnormal current is not detected, and the duty of the PWM signal of each phase maintains a constant value without being limited.

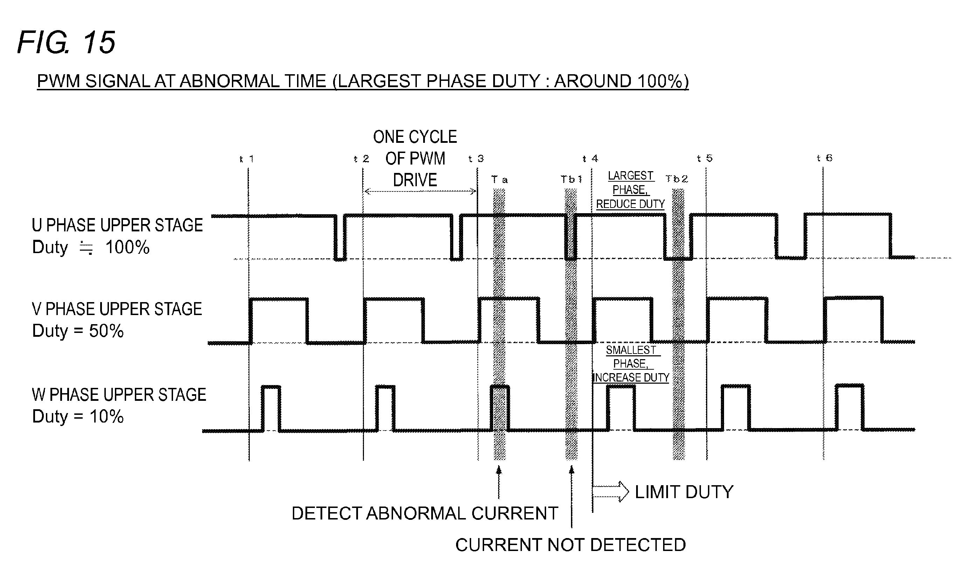

Fig. 15 shows the PWM signal when the abnormal current is detected. Assume that the value of the current flowing to the current detection resistor R being greater than or equal to a predetermined value is detected by the upper stage regeneration abnormality determination unit 103 at timing Ta (upper stage regeneration). The timing Ta corresponds to timing T3 of Fig .2. At timing Tb1, the current cannot be detected since the OFF period of the U phase (largest phase) is short with respect to the time necessary for current detection. When the abnormal current is detected at the timing Ta, the duty limiting unit 106 limits the duty so that the duty of the PWM signal of each phase after the timing t4 is within a predetermined range. In other words, the duty of the U phase (largest phase) is reduced to 80% and the duty of the W phase (smallest phase) is increased to 20%, for example. The duty of the V phase (intermediate phase) remains at 50%.

Therefore, the OFF period of the upper stage switching element Q1 of the U phase becomes long from the next cycle (t4 to t5 zone) after the detection of the abnormal current by limiting the duty, and hence the abnormal current at the time of lower stage regeneration can be reliably detected at the timing Tb2. Furthermore, the abnormal current at the time of upper stage regeneration can also be reliably detected since the ON period of the upper stage switching element Q5 of W phase becomes long. In the case of Fig. 15, the duty of the W phase does not necessarily need to be increased since the current is detected (see t3 to t4 zone) even if the duty of the W phase is 10%.

If the state in which the abnormal current is not detected continues for a constant time (e.g., cycle or timing in which the abnormal current is not detected continues for a predetermined number) after limiting the duty (after t4), the duty limiting unit 106 cancels the limitation of the duty, and returns the duty of the PWM signal of each phase to the original state, that is, the state of Fig.

14.

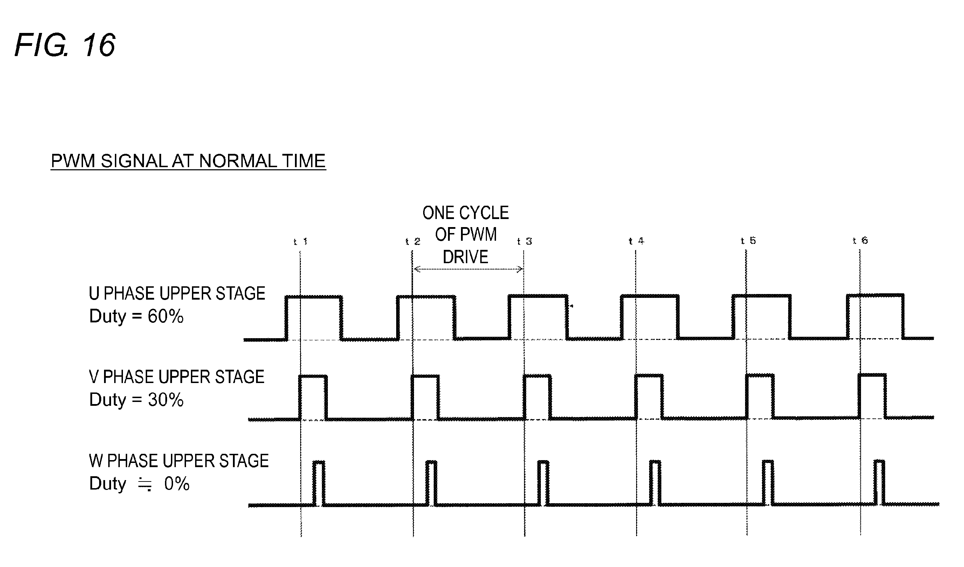

Next, a second example will be described. Fig. 16 shows the PWM signal of normal time when the duty of the upper stage switching element Q1 of the U phase (largest phase) is around 60%, the duty of the upper stage switching element Q3 of the V phase (intermediate phase) is 30%, and the duty of the upper stage switching element Q5 of the W phase (smallest phase) is 0%. In this state, the abnormal current is not detected, and the duty of the PWM signal of each phase maintains a constant value without being limited.

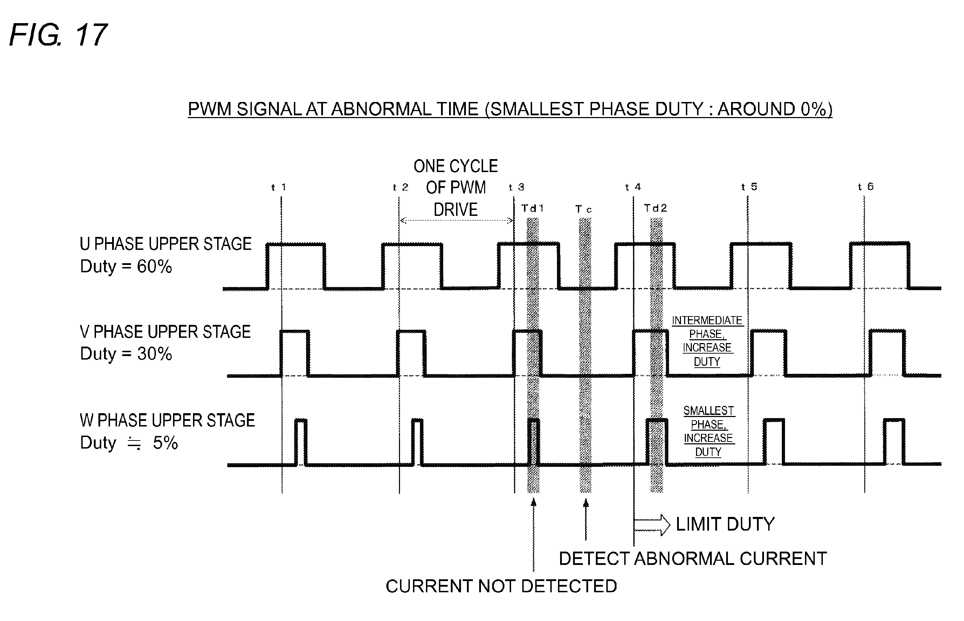

Fig. 17 shows the PWM signal when the abnormal current is detected. In this case, assume that the value of the current flowing to the current detection resistor R being greater than or equal to a predetermined value is detected by the lower stage regeneration abnormality determination unit 104 at timing Tc (lower stage regeneration). The timing Tc corresponds to timing T4 of Fig .2. At timing Td1, the current cannot be detected since the ON period of the W phase (smallest phase) is short with respect to the time necessary for current detection. When the abnormal current is detected at the timing Tc, the duty limiting unit 106 limits the duty so that the duty of the PWM signal of each phase after the timing t4 is within a predetermined range. In other words, the duty of the W phase (smallest phase) is increased to 15% and the duty of the V phase (intermediate phase) is increased to 35%. The duty of the U phase (largest phase) remains at 60%.

Therefore, the ON of the upper stage switching element Q5 of the W phase becomes long from the next cycle (t4 to t5 zone) after the detection of the abnormal current by limiting the duty, and hence the abnormal current at the time of upper stage regeneration can be reliably detected at the timing Td2. Furthermore, the abnormal current at the time of upper stage regeneration can also be reliably detected since the ON period of the upper stage switching element Q3 of V phase becomes long.

If the state in which the abnormal current is not detected continues for a constant time (e.g., cycle or timing in which the abnormal current is not detected continues for a predetermined number) after limiting the duty (after t4), the duty limiting unit 106 cancels the limitation of the duty, and returns the duty of the PWM signal of each phase to the original state, that is, the state of Fig. 16.

The duty limitation when the abnormal current is detected at the timing Ta, Tc at the time of upper stage regeneration and lower stage regeneration have been described in Fig. 15 and Fig. 17, but the duty limitation similar to the above is carried out even if the abnormal current is detected at the timing (corresponding to T1, T2 of Fig. 2) at the normal time other than at the time of regeneration.

If one of the abnormality determination units 103 to 105 determines abnormality while limiting the duty, the control unit 102 determines that failure has occurred. In this case, determination may be made that failure has occurred at the time point the abnormal current is detected at the timing (e.g., timing Tb2 of Fig. 15, timing Td2 of Fig. 17) in one cycle after limiting the duty, but determination is preferably made that failure has occurred when the abnormal current is detected continuously for a predetermined number of times over a plurality of cycles after limiting the duty in order to enhance the accuracy of failure determination.

Therefore, in the present embodiment, the duty of each phase does not become 100% or 0% (or vicinity thereof) since the duty is limited such that the duty of the PWM signal of each phase becomes within a predetermined range (range of $\alpha$ to $\beta$ in Fig. 13) when the abnormal current is detected at one of a plurality of timings including the normal time and the time of regeneration. Therefore, the time necessary for current detection can be ensured, the abnormal current at the time of regeneration can be reliably detected, and the failure can be rapidly detected.

When the abnormal current is detected, the duty is limited in the range as shown in Fig. 13 instead of extremely lowering the duty, and thus the motor drive force is suppressed from being unnecessarily lowered under a state in which the motor needs to be driven at maximum speed.

In the present embodiment, when a state in which the abnormal current is no longer detected continues for a constant time after the duty is limited, the duty limitation is released and the duty is returned to the original. Thus, the motor is not continuously driven at low power indefinitely and the motor drive force can be rapidly recovered.

Furthermore, in the present embodiment, the abnormal current is detected even at the time of regeneration in addition to the normal time, but a threshold value for detecting the abnormal current can be easily and accurately set since the current flowing to the current detection resistor R at the time of regeneration is zero in a normal state.

As described above, the detection time of a certain extent is necessary to detect the current flowing to the current detection resistor R, and thus the values $\alpha$, $\beta$ for duty limitation shown in Fig. 13 are set in view of the detection time. The values of $\alpha$, $\beta$ are set so that the ON period of the smallest phase and the OFF period of the largest phase of the PWM signal respectively become greater than or equal to the detection time to enable current detection.

Other embodiments of the present invention will now be described.

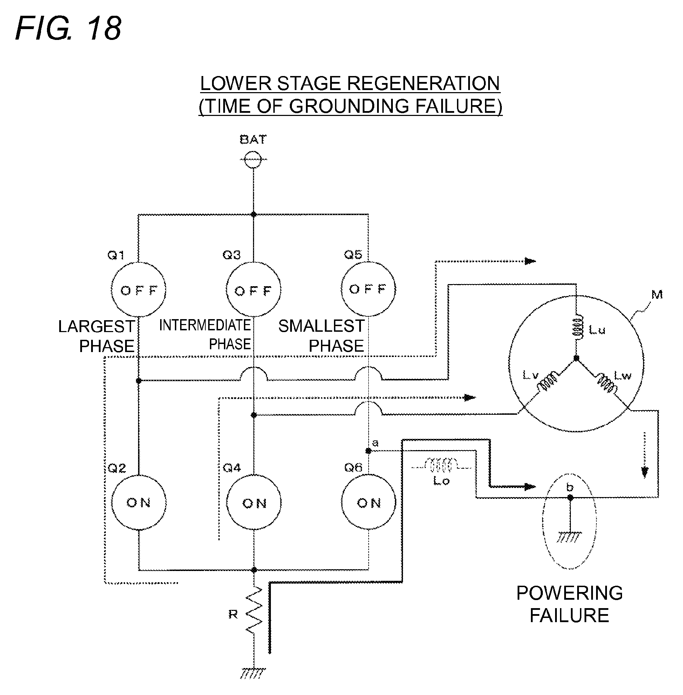

Fig. 18 is a view describing the detection of a grounding failure at the time of lower stage regeneration. As shown in the figure, when the grounding failure occurs at the terminal of the smallest phase (W phase) of the motor M, the current as shown with a solid arrow and a broken arrow flows at the time of lower stage regeneration. The current shown with a solid arrow is obtained when electric energy accumulated in a parasitic inductance Lo existing between a node a of the switching elements Q5, Q6 and a ground point b is discharged through a closed circuit of the current detection resistor R — switching element Q6 — ground, and it is a negative current that directly reaches the ground point b without through the motor M. The grounding failure can be detected by detecting the negative current. In this case, the lower stage regeneration abnormality determination unit 104 (Fig. 1) determines as abnormal (grounding failure of motor) when detected that a current of greater than or equal to a predetermined value in a direction from the resistor to the motor M flowed to the current detection resistor R in the lower stage regeneration state. The grounding failure can be detected similar to the above even when the grounding failure occurred in other phases.

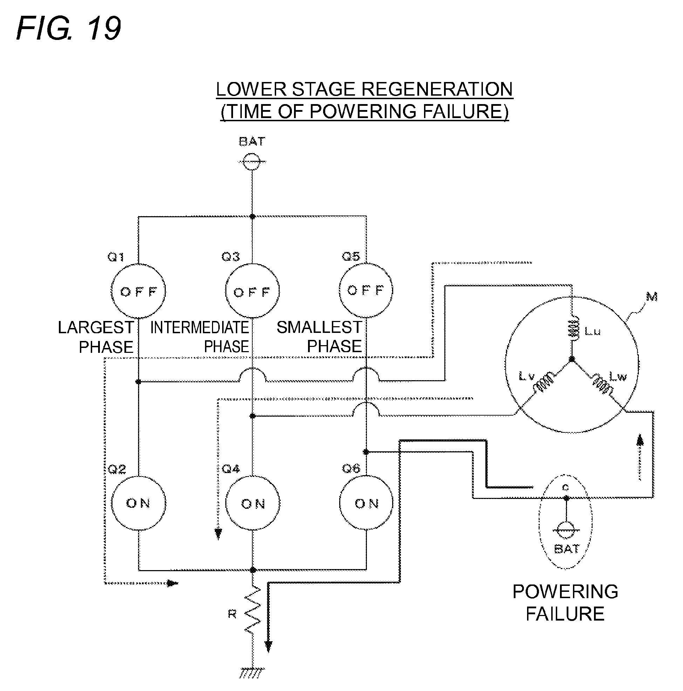

Fig. 19 is a view describing the detection of a power supply short circuit failure (hereinafter referred to as "powering failure") at the time of lower stage regeneration. As shown in the figure, the current as shown with the solid arrow and the broken arrow flows at the time of lower stage regeneration when the powering failure occurred at the terminal of the smallest phase (W phase) of the motor M. The current shown with the solid arrow is a positive current to the current detection resistor R from a powering point c (power supply BAT) through the switching element Q6. The powering failure can be detected by detecting the positive current. In this case, the lower stage regeneration abnormality determination unit 104 (Fig. 1) determines as abnormal (powering failure of motor) when detected that a current of greater than or equal to a predetermined value in a direction from the motor M to the resistor flowed to the current detection resistor R in the lower stage regeneration state. The powering failure can be detected similar to the above even when powering failure occurred in other phases.

According to the present embodiment, the grounding failure and the powering failure of the motor M can be detected by detecting the current flowing to the current detection resistor R at the time of lower stage regeneration. In such failure detections, the failure can be rapidly detected by limiting the duty as described above.

The present invention may adopt various embodiments other than the above. For example, in Figs. 14 to 17, only one PWM signal is contained in one cycle of the PWM drive, but a plurality of PWM signals may be contained in one cycle. The carrier signal (reference wave) when generating the PWM signal may be a sawtooth wave or a triangular wave.

In the present invention, the pattern of duty limitation is not limited to those described above, as long as the duty of each phase of the largest phase, the intermediate phase, and the smallest phase is within a predetermined range. For example, the duty of only the largest phase may be reduced, or duty of both the largest phase and the intermediate phase may be reduced. The duty of the largest phase and the intermediate phase may be reduced, and the duty of the smallest phase may be increased. Furthermore, the duty of only the smallest phase may be increased. The value of the duty is not limited to the above, and other values may be adopted.

In the embodiment described above, a case in which the U phase is the largest phase, the V phase is the intermediate phase, and the W phase is the smallest phase has been described by way of example, but this is merely one example, and the present invention can be applied to cases of any combination of each phase and the largest phase, the intermediate phase, and the smallest phase such as a case in which the U phase is the smallest phase, the V phase is the intermediate phase, and the W phase is the largest phase, and a case in which the U phase is the intermediate phase, the V phase is the smallest phase, and the W phase is the largest phase.

In the embodiment described above, the lower stage switching element is turned OFF when the upper stage switching element is turned ON, but a dead time may be provided between the ON/OFF timing of the upper stage switching element and the ON/OFF timing of the lower stage switching element. That is, the lower stage switching element may be turned from ON to OFF at a predetermined time before the timing the upper stage switching element is turned from OFF to ON. This is to prevent the upper stage switching element and the lower stage switching element from being simultaneously turned ON and the circuit from being short circuit.

In the embodiment described above, an FET is used for the switching element, but other switching elements such as an IGBT (Insulated Gate Bipolar Transistor) may be used.

In the embodiment described above, a three phase motor has been described for the motor by way of example, but the present invention can also be applied to when driving a multi-phase motor of four or more phases.

In the embodiment described above, a brushless motor has been described for the motor by way of example, but the present invention can also be applied to a device for driving an inductive motor, a synchronous motor, or the like.

**Claims**

**1.** A motor drive device **characterized by** comprising:

a drive unit (101), in which at least three sets of a pair of upper and lower arms including switching elements (Q1 to Q6) at the upper arm and the lower arm are arranged, for driving a motor (M) based on an ON/OFF operation of each of the switching elements (Q1 to Q6) by a PWM (Pulse Width Modulation) signal;
a single current detection resistor (R) for detecting a current flowing to the drive unit (101); and
a control unit (102) for detecting a current value of a current flowing to each phase of the motor (M) based on the current flowing to the current detection resistor (R), and outputting the PWM signal to each of the switching elements (Q1 to Q6) based on a target current value of each phase and the detected current value of each phase, wherein
the control unit (102) further includes
an upper stage regeneration abnormality determination unit (103) for detecting a current flowing to the current detection resistor (R) in an upper stage regeneration state in which the switching elements (Q1, Q3, Q5) of the upper arms of all phases is in an ON state and the switching elements (Q2, Q4, Q6) of the lower arms of all phases are in an OFF state, and determining abnormality based on the detection result,
a lower stage regeneration abnormality determination unit (104) for detecting a current flowing to the current detection resistor (R) in a lower stage regeneration state in which the switching elements (Q1, Q3, Q5) of the upper arms of all phases is in the OFF state and the switching elements (Q2, Q4, Q6) of the lower arms of all phases are in the ON state, and determining abnormality based on the detection result,
a normal time abnormality determination unit (105) for detecting a current flowing to the current detection resistor (R) in a normal state excluding the upper stage regeneration state and the lower stage regeneration state and determining abnormality based on the detection result, and
a duty limiting unit (106) for limiting a duty so that a maximum value of a duty of the PWM signal of each phase is smaller than or equal to a constant value $\alpha$ ($\alpha$ < 100%) and a minimum value is greater than or equal to a constant value $\beta$ ($\beta$ > 0%) when at least one of the upper stage regeneration abnormality determination unit (103), the lower stage regeneration abnormality determination unit (104), or the normal time abnormality determination unit (105) detects an abnormal current.

**2.** The motor drive device according to claim 1, **characterized in that** the control unit (102) determines that a failure has occurred when the upper stage regeneration abnormality determination unit (103), the lower stage regeneration abnormality determination unit (104), or the normal time abnormality determination unit (105) determines abnormality while limiting the duty by the duty limiting unit (106).

**3.** The motor drive device according to claim 1, **characterized in that** the control unit (102) determines that a failure has occurred when abnormality is determined continuously for a predetermined number of times over a plurality of cycles by the upper stage regeneration abnormality determination unit (103), the lower stage regeneration abnormality determination unit (104), or the normal time abnormality determination unit (105) after limiting the duty by the duty limiting unit (106).

4. The motor drive device according to claim 1, **characterized in that** the duty limiting unit (106) releases the limitation of the duty and returns the duty of the PWM signal of each phase to an original state when a state in which the abnormal current is not detected by each of the abnormality determination units continues for a constant time after limiting the duty.

5. The motor drive device according to claim 1, **characterized in that** the upper stage regeneration abnormality determination unit (103) determines as an ON failure in which at least one of the switching elements (Q2, Q4, Q6) of the lower arm remains in the ON state when a current value of the current flowing to the current detection resistor (R) is greater than or equal to a predetermined value in the upper stage regeneration state.

6. The motor drive device according to claim 1, **characterized in that** the lower stage regeneration abnormality determination unit (104) determines as an ON failure in which at least one of the switching elements (Q1, Q3, Q5) of the upper arm remains in the ON state when a current value of the current flowing to the current detection resistor (R) is greater than or equal to a predetermined value in the lower stage regeneration state.

7. The motor drive device according to claim 1, **characterized in that** the lower stage regeneration abnormality determination unit (104) determines as a grounding failure of the motor (M) when detected that a current of greater than or equal to a predetermined value in a direction from the resistor (R) to the motor (M) flowed to the current detection resistor (R) in the lower stage regeneration state.

8. The motor drive device according to claim 1, **characterized in that** the lower stage regeneration abnormality determination unit (104) determines as a power supply short circuit failure of the motor (M) when detected that a current of greater than or equal to a predetermined value in a direction from the motor (M) to the resistor (R) flowed to the current detection resistor (R) in the lower stage regeneration state.

## FIG. 1

DRIVE UNIT 101

Q1  Q3  Q5

Q2  Q4  Q6

R

M

PWM SIGNAL

CONTROL UNIT

103 — UPPER STAGE REGENERATIVE ABNORMALITY DETERMINATION UNIT

104 — LOWER STAGE REGENERATIVE ABNORMALITY DETERMINATION UNIT

105 — NORMAL TIME ABNORMALITY DETERMINATION UNIT

DUTY CONTROL UNIT — 106

102

TARGET CURRENT VALUE

## FIG. 2

## FIG. 3

| FAILURE MODE | LARGEST PHASE | | INTERMEDIATE PHASE | | SMALLEST PHASE | |
|---|---|---|---|---|---|---|
| | UPPER STAGE SHORT CIRCUIT | LOWER STAGE SHORT CIRCUIT | UPPER STAGE SHORT CIRCUIT | LOWER STAGE SHORT CIRCUIT | UPPER STAGE SHORT CIRCUIT | LOWER STAGE SHORT CIRCUIT |
| NORMAL CURRENT DETECTION (1) | ✕ | ◯ | ◯ | ✕ | ◯ | ✕ |
| NORMAL CURRENT DETECTION (2) | ✕ | ◯ | ✕ | ◯ | ◯ | ✕ |
| UPPER STAGE REGENERATION CURRENT DETECTION | ✕ | ◯ | ✕ | ◯ | ✕ | ◯ |
| LOWER STAGE REGENERATION CURRENT DETECTION | ◯ | ✕ | ◯ | ✕ | ◯ | ✕ |

◯ : DETECTABLE ✕ : NON-DETECTABLE

EP 2 369 736 A1

## FIG. 4

NORMAL CURRENT DETECTION (1)
(NORMAL TIME)

BAT

| Q1 | Q3 | Q5 |
| ON | OFF | OFF |

M

Lu

Lv   Lw

| Q2 | Q4 | Q6 |
| OFF | ON | ON |

LARGEST
PHASE

INTERMEDIATE
PHASE

SMALLEST
PHASE

R

# FIG. 5

## NORMAL CURRENT DETECTION (2)
## (NORMAL TIME)

BAT

Q1
ON

Q3
ON

Q5
OFF

M

Lu

Lv

Lw

Q2
OFF

Q4
OFF

Q6
ON

LARGEST
PHASE

INTERMEDIATE
PHASE

SMALLEST
PHASE

R

# FIG. 6

## UPPER STAGE REGENERATION
### (NORMAL TIME)

## FIG. 7

### UPPER STAGE REGENERATION (TIME OF LOWER STAGE SHORT CIRCUIT OF SMALLEST PHASE)

# FIG. 8

## LOWER STAGE REGENERATION (NORMAL TIME)

# FIG. 9

<u>LOWER STAGE REGENERATION (TIME OF UPPER
STAGE SHORT CIRCUIT OF LARGEST PHASE)</u>

EP 2 369 736 A1

## FIG. 10

| | |
|---|---|
| LARGEST PHASE UPPER STAGE PWM SIGNAL (Q1) | OFF / ON / OFF |
| INTERMEDIATE PHASE UPPER STAGE PWM SIGNAL (Q3) | OFF / ON / OFF |
| SMALLEST PHASE UPPER STAGE PWM SIGNAL (Q5) | OFF / ON / OFF |

T1  T2        T3        T4

# FIG. 11

LARGEST PHASE UPPER STAGE PWM SIGNAL (Q1)

OFF    ON    OFF    OFF

INTERMEDIATE PHASE UPPER STAGE PWM SIGNAL (Q3)

OFF    ON    OFF    OFF

SMALLEST PHASE UPPER STAGE PWM SIGNAL (Q5)

OFF    ON    OFF

T1  T2  T3    T4

EP 2 369 736 A1

## FIG. 12

V PHASE    W PHASE    U PHASE

DUTY (%)

ELECTRIC ANGLE (deg)

## FIG. 13

V PHASE    W PHASE    U PHASE

DUTY (%)

$\alpha$

DUTY LIMITING RANGE

$\beta$

ELECTRIC ANGLE (deg)

# FIG. 14

PWM SIGNAL AT NORMAL TIME

## FIG. 15

PWM SIGNAL AT ABNORMAL TIME (LARGEST PHASE DUTY : AROUND 100%)

ONE CYCLE OF PWM DRIVE

U PHASE UPPER STAGE
Duty ≒ 100%

V PHASE UPPER STAGE
Duty = 50%

W PHASE UPPER STAGE
Duty = 10%

LARGEST PHASE, REDUCE DUTY

SMALLEST PHASE, INCREASE DUTY

LIMIT DUTY

DETECT ABNORMAL CURRENT

CURRENT NOT DETECTED

EP 2 369 736 A1

## FIG. 16

PWM SIGNAL AT NORMAL TIME

ONE CYCLE OF PWM DRIVE

U PHASE UPPER STAGE
Duty = 60%

V PHASE UPPER STAGE
Duty = 30%

W PHASE UPPER STAGE
Duty ≒ 0%

EP 2 369 736 A1

# FIG. 17

PWM SIGNAL AT ABNORMAL TIME (SMALLEST PHASE DUTY : AROUND 0%)

ONE CYCLE OF PWM DRIVE

U PHASE UPPER STAGE
Duty = 60%

V PHASE UPPER STAGE
Duty = 30%

INTERMEDIATE PHASE, INCREASE DUTY

W PHASE UPPER STAGE
Duty ≒ 5%

SMALLEST PHASE, INCREASE DUTY

LIMIT DUTY

DETECT ABNORMAL CURRENT

CURRENT NOT DETECTED

EP 2 369 736 A1

## FIG. 18

LOWER STAGE REGENERATION
(TIME OF GROUNDING FAILURE)

# FIG. 19

LOWER STAGE REGENERATION
(TIME OF POWERING FAILURE)

FIG. 20

EP 2 369 736 A1

*FIG. 21*

U PHASE    V PHASE    W PHASE

POWER SUPPLY CIRCUIT

1

C

Q1 ON
Q3 OFF
Q5 OFF

Q2 OFF
Q4 ON
Q6 ON

R

U PHASE CURRENT

MOTOR

M

FIG. 22

EP 2 369 736 A1

## FIG. 23

| FAILURE MODE | LARGEST PHASE | | INTERMEDIATE PHASE | | SMALLEST PHASE | |
|---|---|---|---|---|---|---|
| | UPPER STAGE SHORT CIRCUIT | LOWER STAGE SHORT CIRCUIT | UPPER STAGE SHORT CIRCUIT | LOWER STAGE SHORT CIRCUIT | UPPER STAGE SHORT CIRCUIT | LOWER STAGE SHORT CIRCUIT |
| NORMAL CURRENT DETECTION (1) | ✕ | ◯ | ◯ | ✕ | ◯ | ✕ |
| NORMAL CURRENT DETECTION (2) | ✕ | ◯ | ✕ | ◯ | ◯ | ✕ |

◯ : DETECTABLE　✕ : NON-DETECTABLE

EP 2 369 736 A1

Europäisches
Patentamt

European
Patent Office

Office européen
des brevets

# EUROPEAN SEARCH REPORT

Application Number

EP 11 15 9833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2009 044879 A (JTEKT CORP) 26 February 2009 (2009-02-26) * paragraphs [0003], [0036] - [0047]; figures 2-7 * | 1-7 | INV. H02P27/08 H02P29/02 H02M1/32 B62D5/04 |
| Y | FREDE BLAABJERG ET AL: "Single Current Sensor Technique in the DC Link of Three-Phase PWM-VS Inverters: A Review and a Novel Solution", 19970901; 19970900, vol. 33, no. 5, 1 September 1997 (1997-09-01), pages 1241-1253, XP011022258, * page 1248 - page 1249; figures 13-15 * | 1-8 | |
| Y | WOO-CHEOL LEE ET AL: "Comparison of Single-Sensor Current Control in the DC Link for Three-Phase Voltage-SourcePWM Converters", IEEE TRANSACTIONS ON INDUSTRIAL ELECTRONICS, IEEE SERVICE CENTER, PISCATAWAY, NJ, USA, vol. 48, no. 3, 1 June 2001 (2001-06-01), XP011023833, ISSN: 0278-0046 * page 493 - page 494; figure 13 * | 1-8 | TECHNICAL FIELDS SEARCHED (IPC) H02P H02M B62D |
| Y | EP 0 637 537 A2 (AISIN SEIKI [JP]) 8 February 1995 (1995-02-08) * page 7, line 34 - page 8, line 21; figure 9 * | 1-8 | |
| A | EP 1 347 567 A1 (MOTOROLA INC [US]) 24 September 2003 (2003-09-24) * paragraphs [0060], [0082], [0147] - [0150]; figures 1,3,10 * | 1-8 | |

The present search report has been drawn up for all claims

| Place of search | Date of completion of the search | Examiner |
|---|---|---|
| The Hague | 30 May 2011 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 15 9833

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2011

| Patent document cited in search report | | Publication date | Patent family member(s) | | Publication date |
|---|---|---|---|---|---|
| JP 2009044879 | A | 26-02-2009 | NONE | | |
| EP 0637537 | A2 | 08-02-1995 | DE | 69415602 D1 | 11-02-1999 |
| | | | DE | 69415602 T2 | 24-06-1999 |
| | | | JP | 3206783 B2 | 10-09-2001 |
| | | | JP | 7047963 A | 21-02-1995 |
| EP 1347567 | A1 | 24-09-2003 | EP | 1347566 A1 | 24-09-2003 |
| | | | US | 2003173946 A1 | 18-09-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007244133 A
- JP 3484968 B
- JP 2009131098 A